# FASCICULE DE BREVET EUROPEEN

(11) **EP 2 185 414 B1**
(45) Date de publication et mention de la délivrance du brevet: **04.09.2019**
(21) Numéro de dépôt: 08774860.4
(22) Date de dépôt: 08.07.2008
(51) Int. Cl.: B64D 27/26

(54) **MÂT D'ACCROCHAGE DE MOTEUR POUR AÉRONEF DISPOSANT D'UN PALONNIER ARTICULÉ EN QUATRE POINTS**
FLUGZEUGTRIEBWERKSGONDELBEFESTIGUNG MIT EINEM AN VIER PUNKTEN ANGELENKTEN TRAGRAHMEN
AIRCRAFT ENGINE ATTACHMENT PYLON WITH A FOUR-POINT ARTICULATED SPREADER BEAM

(30) Priorité: 09.07.2007 FR 0756361
(43) Date de publication de la demande: 19.05.2010
(73) Titulaire: AIRBUS OPERATIONS, 31060 Toulouse (FR)
(72) Inventeur: HARAMBURU, Eric, F-31000 Toulouse (FR); SAMMITO, Laurent, F-31300 Toulouse (FR); LARROCHELLE, Jean, F-31200 Toulouse (FR)
(74) Mandataire: Ilgart, Jean-Christophe
(86) Numéro de dépôt international: PCT/EP2008/058814
(87) Numéro de publication internationale: WO 2009/007354

(56) Documents cités:
- EP-A- 0 805 108
- EP-A- 1 493 663
- FR-A- 2 887 850

## Description

### DOMAINE TECHNIQUE

La présente invention se rapporte de façon générale à un ensemble moteur pour aéronef, du type comprenant un moteur, un mât d'accrochage, ainsi qu'un système de montage du moteur pourvu d'une pluralité d'attaches moteur et étant interposé entre une structure rigide du mât d'accrochage et le moteur.

L'invention se rapporte également à un tel mât d'accrochage de moteur d'aéronef, comme par exemple du document EP 0 805 108 A2.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide également dite structure « primaire », souvent du type « caisson », c'est-à-dire formée par l'assemblage de longerons supérieur et inférieur et de deux panneaux latéraux raccordés entre eux par l'intermédiaire de nervures transversales.

D'autre part, le mât est muni d'un système de montage du moteur interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à un palonnier, lui-même monté articulé sur un corps d'attache moteur arrière fixé sur le caisson. Alternativement, le palonnier peut être monté articulé sur un élément de support distinct du corps d'attache moteur arrière, par exemple agencé fixement sur le caisson, entre les attaches moteur avant et arrière.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Dans les réalisations de l'art antérieur, le dispositif de reprise des efforts de poussée présente une conception particulière intégrant des fonctions de sécurité/secours dites « Fail Safe », permettant d'assurer la transmission des efforts de poussée vers la voilure même en cas de défaillance, pouvant par exemple prendre la forme d'une rupture de bielle latérale ou d'un organe d'articulation établissant la liaison entre l'une des bielles latérales et le palonnier, ou encore la rupture de l'organe d'articulation du palonnier par rapport au caisson de mât.

Pour obtenir ces fonctions « Fail Safe », il peut être procédé au doublage des liaisons. A titre d'exemple, l'organe d'articulation du palonnier prend la forme d'un système d'axes intégrant deux organes concentriques, dont l'un est en attente, c'est-à-dire restant inopérant tant que l'organe principal ne présente pas de défaillance. Alternativement, les deux axes concentriques peuvent travailler conjointement en mode normal.

Pour ce qui concerne les bielles latérales de reprise des efforts de poussée, leurs extrémités arrière sont souvent complexifiées par l'intégration d'une liaison additionnelle, dite en attente, avec le corps d'attache de l'attache moteur arrière, tel que cela est notamment connu des documents EP 1 136 355 et US 6 494 403. Ces configurations impliquent non seulement une conception complexe de la partie arrière du système de montage du moteur, qui se traduit par des temps de montage et démontage importants et par conséquent coûteux, mais engendrent également un fort encombrement, ainsi qu'une masse globale sensiblement pénalisante.

Une autre solution permettant de faire face à la rupture de l'une des deux bielles de reprise des efforts de poussée consiste à prévoir un système de butées symétriques sur le corps d'attache moteur arrière, permettant de limiter la rotation du palonnier qui n'est plus raccordé que par une seule des deux bielles. Dans ce cas, l'extrémité latérale du palonnier qui porte la bielle défaillante entre effectivement en contact avec sa butée associée, ce qui stoppe la rotation du palonnier, toujours raccordé à la bielle non-défaillante à son extrémité latérale opposée. Une telle solution est connue du document EP 0 805 108. Elle présente l'inconvénient de nécessiter un encombrement important, notamment en ce qui concerne son palonnier, dont les extrémités latérales doivent être surdimensionnées afin d'être approchées au plus près de leurs butées respectives prévues sur le corps d'attache moteur arrière.

Les deux solutions techniques présentées ci-dessus, permettant de faire face à la rupture de l'une des bielles latérales de reprise des efforts de poussée, présente également un inconvénient commun résidant dans le cumul d'un nombre important de chemins d'efforts distincts destinés à transiter par la partie arrière du système de montage du moteur, rendant sa conception assez compliquée et encombrante. Pour exemple, deux chemins d'efforts de sécurité distincts sont prévus pour faire face à la défaillance de l'une et de l'autre des deux bielles latérales, respectivement.

### EXPOSÉ DE L'INVENTION

L'invention a donc pour but de proposer un mât d'accrochage de moteur pour aéronef remédiant au moins partiellement aux inconvénients mentionnés ci-dessus, relatifs aux réalisations de l'art antérieur.

Pour ce faire, l'invention a pour objet un mât d'accrochage pour moteur d'aéronef, selon la revendication 1.

Ainsi, en mode normal de reprise des efforts de poussée, les efforts transitent de manière classique successivement par les bielles latérales, les extrémités latérales du palonnier, l'organe d'articulation principal de palonnier, puis enfin l'élément de support fixe par rapport à la structure rigide. En raison du jeu pratiqué sur la liaison intégrant l'organe d'articulation secondaire de palonnier, cette liaison reste inopérante dans la reprise des efforts tant que le mode de reprise normal est conservé, à savoir tant que le dispositif de reprise des efforts de poussée ne subit pas de défaillance. Cela permet par ailleurs de conserver un ensemble isostatique en mode normal.

La particularité de l'invention réside donc dans le chemin à travers lequel transitent les efforts, en cas de défaillance survenant sur le dispositif de reprise. En effet, en cas de défaillance d'une bielle latérale prenant par exemple la forme d'une rupture de cette bielle, ou encore d'une rupture d'un organe d'articulation établissant la liaison entre la bielle latérale et le palonnier ou entre cette même bielle et le carter du moteur, l'autre bielle non défaillante tend à faire pivoter le palonnier selon l'axe d'articulation principal de palonnier, jusqu'à ce que la liaison en attente intégrant l'organe d'articulation secondaire de palonnier devienne active, par entrée en contact de pièces initialement montées avec jeu.

Par conséquent, malgré la défaillance de l'une des bielles latérales, le palonnier reste articulé en trois points, formant par exemple un V dont la pointe est constituée par l'organe d'articulation principal de palonnier. Il doit être compris que plus l'organe d'articulation secondaire de palonnier est éloigné de l'organe d'articulation principal de palonnier, plus le bras de levier observé est important, et donc moins les efforts transitant par l'organe d'articulation principal sont élevés. Cela permet avantageusement de prévoir un dimensionnement raisonnable pour les organes d'articulation principal et secondaire ainsi que leurs éléments environnants, non pénalisant en terme de masse et d'encombrement.

De plus, dans un plan (P') du palonnier, la distance (d1) entre l'axe d'articulation principal de palonnier et chaque axe d'articulation d'extrémité arrière de bielle est inférieure ou égale à la distance (d2) entre l'axe d'articulation principal de palonnier et l'axe d'articulation secondaire de palonnier. De manière plus préférentielle, le rapport entre (d2) et (d1) peut être compris entre 1 et 3, et encore plus préférentiellement de l'ordre de 2.

Surtout, l'extrémité arrière des bielles latérales ne nécessite plus l'intégration d'une liaison additionnelle pour faire face à une éventuelle rupture de l'organe de liaison avec l'extrémité latérale associée du palonnier, étant donné que dans ce dernier cas, la reprise des efforts s'effectue de la manière originale décrite ci-dessus, propre à la présente invention. C'est ainsi la conception de l'ensemble de la partie arrière du système de montage du moteur qui peut être simplifiée.

La conception est également fortement simplifiée par rapport à celle rencontrée antérieurement, par le fait que le chemin des efforts de poussée de sécurité est sensiblement identique quelque soit celle des deux bielles qui fait l'objet de la défaillance. En effet, les efforts transmis au palonnier par la bielle non-défaillante passent dans les deux cas successivement par l'organe d'articulation principal de palonnier, l'extension longitudinale du palonnier, l'organe d'articulation secondaire de palonnier devenu actif, l'élément de support, puis la structure rigide du mât. En d'autres termes, quelque soit celle des deux bielles qui est défaillante, c'est le même organe d'articulation secondaire de palonnier qui permet d'établir la butée stoppant la rotation du palonnier.

De manière avantageuse, il n'est donc plus nécessaire de prévoir deux chemins d'efforts de sécurité distincts pour faire face à la défaillance de l'une et de l'autre des deux bielles latérales, respectivement, comme cela était le cas antérieurement.

En outre, en cas de défaillance prenant la forme d'une rupture de l'organe d'articulation principal de palonnier, la liaison en attente intégrant l'organe d'articulation secondaire de palonnier devient active, par entrée en contact de pièces initialement montées avec jeu. Par conséquent, malgré la défaillance de cet organe principal, le palonnier reste articulé en trois points, formant de préférence un V dont la pointe est constituée par l'organe d'articulation secondaire de palonnier, et dont les deux extrémités restent articulées sur les bielles latérales. En raison de la localisation de l'axe d'articulation secondaire dans le plan (P), l'équilibrage des efforts transitant par les deux bielles latérales peut avantageusement s'effectuer d'une manière identique ou similaire à celle rencontrée en mode normal, à l'aide de l'organe d'articulation principal.

Il n'est plus nécessaire de prévoir un organe double d'articulation, un organe simple étant effectivement suffisant, en raison de l'existence du chemin d'effort de sécurité propre à la présente invention. La masse globale et l'encombrement du dispositif de reprise des efforts de poussée s'en trouvent avantageusement diminués.

De préférence, ledit système de montage du moteur comporte notamment une attache moteur arrière comprenant un corps d'attache sur lequel est articulée au moins une manille également destinée à être articulée sur le moteur, ledit élément de support étant ledit corps d'attache. Néanmoins, une alternative serait de prévoir un élément de support distinct du corps d'attache moteur arrière, de préférence agencé fixement sur le caisson, entre l'attache moteur avant et l'attache moteur arrière.

De préférence, ledit palonnier prend la forme d'un T ou d'une étoile à trois branches. D'une manière plus générale, il prend la forme d'une pièce à trois bras reliés en un point central par lequel passe l'axe d'articulation principal de palonnier, les extrémités distales des trois bras étant respectivement traversées par les deux axes d'articulation de bielle, et l'axe d'articulation principal de palonnier.

Dans le premier cas, en considérant que le T est constitué d'une base et d'une barre, les bielles sont articulées aux extrémités de la barre, la liaison avec jeu intégrant l'organe d'articulation secondaire de palonnier est située à l'extrémité libre de la base, et la liaison active intégrant l'organe d'articulation principal de palonnier est située à l'intersection entre la base et la barre du T. La disposition précitée n'est donnée qu'à titre d'exemple, et peut bien évidemment être modifiée en fonction des besoins rencontrés. Par exemple, la liaison active intégrant l'organe d'articulation principal de palonnier pourrait être située entre l'extrémité libre de la base et l'intersection entre la base et la barre, la base restant de préférence agencée selon la direction longitudinale du mât, en vue de dessus.

Dans le second cas de l'étoile, on peut prévoir que les bielles sont chacune articulées à une extrémité libre de branche d'étoile, la liaison avec jeu intégrant l'organe d'articulation secondaire de palonnier est située à l'extrémité libre de la troisième branche de l'étoile, et la liaison active intégrant l'organe d'articulation principal de palonnier est située à l'intersection des trois branches.

De manière préférentielle, ledit palonnier est agencé dans un plan correspondant à un plan défini par lesdites bielles latérales de reprise des efforts de poussée. Par conséquent, il dispose de préférence d'une forme sensiblement plane.

Toujours de manière préférentielle, ledit plan (P) constitue un plan de symétrie pour la structure rigide et pour le système de montage du moteur (11). Plus généralement, le plan (P) constitue globalement un plan de symétrie vertical pour l'ensemble du mât d'accrochage.

De préférence, ledit organe d'articulation secondaire de palonnier se situe vers l'arrière, en vue de dessus, par rapport audit organe d'articulation principal de palonnier. Une solution inverse dans laquelle il serait situé vers l'avant pourrait naturellement être envisagée, sans sortir du cadre de l'invention.

Enfin, le corps d'attache présente une poutre transversale sur laquelle est montée une ferrure de secours traversée avec jeu par ledit organe d'articulation secondaire. Alternativement, cet organe secondaire pourrait traverser avec jeu la poutre transversale elle-même, sans sortir du cadre de l'invention. Quoi qu'il en soit, il est noté que le jeu prévu, pour rendre la liaison d'articulation associée en attente, n'est pas forcement appliqué entre l'organe secondaire et la poutre ou la ferrure de secours, mais pourrait alternativement être prévu entre cet organe secondaire et le palonnier, sans sortir du cadre de l'invention.

L'invention a également pour objet un ensemble moteur pour aéronef comprenant un mât tel que celui qui vient d'être présenté, ainsi qu'un moteur fixé sur ce mât.

Enfin, elle a pour objet un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef, comprenant un mât d'accrochage selon un mode de réalisation préféré de la présente invention ;
- la figure 2 représente une vue partielle détaillée en perspective de la partie arrière du système de montage du moteur, appartenant au mât montré sur la figure 1 ;
- la figure 3 représente une vue en coupe longitudinale passant par le plan de symétrie P de la figure 2 ; et
- la figure 4 représente en vue partielle en coupe passant par le plan de palonnier P' des figures 2 et 3 ;
- la figure 5 représente une vue similaire à celle de la figure 4, dans une configuration adoptée suite à une défaillance sur l'une des deux bielles latérales de reprise des efforts de poussée ;
- la figure 6 représente une vue similaire à celle de la figure 4, dans une configuration adoptée suite à une défaillance sur l'organe d'articulation principal du palonnier ; et
- la figure 7 représente une vue similaire à celle montrée sur la figure 2, la partie arrière du système de montage du moteur se présentant sous la forme d'un autre mode de réalisation préféré de la présente invention.

### EXPOSÉ DÉTAILLÉ DE MODES DE RÉALISATION PARTICULIERS

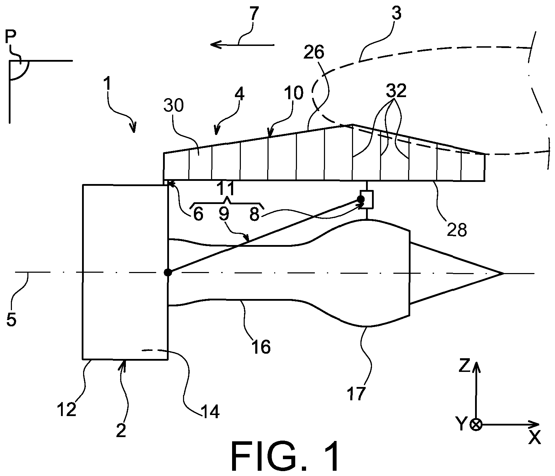

En référence à la figure 1, on voit un ensemble moteur 1 pour aéronef destiné à être fixé sous une aile 3 de cet aéronef, cet ensemble 1 objet de la présente invention étant pourvu d'un mât d'accrochage 4 se présentant sous la forme d'un mode de réalisation préféré de la présente invention.

Globalement, l'ensemble moteur 1 comporte un moteur tel qu'un turboréacteur 2 et le mât d'accrochage 4, ce dernier étant notamment muni d'une structure rigide 10 et d'un système de montage du moteur 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée, cette dernière étant également dénommée structure primaire. A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, le système 11 est constitué par une attache moteur avant 6, une attache moteur arrière 8, ainsi qu'une attache 9 formant un dispositif de reprise des efforts de poussée générés par le turbomoteur 2. Comme cela est montré schématiquement sur le figure 1, ce dispositif 9 prend la forme de deux bielles latérales (une seule étant visible en raison de la vue de côté) raccordées d'une part à une partie arrière du carter de soufflante 12, et d'autre part à un palonnier monté articulé par rapport au caisson 10, comme cela sera détaillé ci-après.

L'attache moteur avant 6 est solidarisée au carter de soufflante 12, et est par exemple conçue de manière à pouvoir reprendre des efforts générés par le turboréacteur 2 selon les directions Y et Z, à l'aide de manilles/biellettes. A titre indicatif, cette attache avant 6 pénètre de préférence dans une portion d'extrémité circonférentielle du carter de soufflante 12.

L'attache moteur arrière 8 est globalement interposée entre le carter d'éjection 17 et la structure rigide 10 du mât. Elle est quant à elle conçue de manière à pouvoir reprendre des efforts générés par le turboréacteur 2 selon les directions Y et Z, ainsi que ceux s'exerçant selon la direction X grâce à sa coopération particulière avec le dispositif de reprise 9, qui sera exposée ci-dessous.

Toujours en référence à la figure 1, on peut apercevoir que la structure 10 présente la forme d'un caisson s'étendant dans la direction X, ce caisson étant également appelé caisson de torsion. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres. Ici, le longeron inférieur 28 s'étend de préférence dans un plan incliné par rapport à l'horizontale, sur toute sa longueur, comme montré sur la figure 1. L'inclinaison est telle que le longeron inférieur 28, parallèle à la direction Y, se rapproche de l'axe 5 en allant vers l'arrière, dans le but de se rapprocher du carter d'éjection 17 afin de permettre la mise en place de l'attache moteur arrière 8 sur ce même carter 17. De préférence, l'ensemble des éléments formant le caisson sont réalisés en matériaux composites comprenant un mélange de résine et de fibres de verre et/ou de carbone.

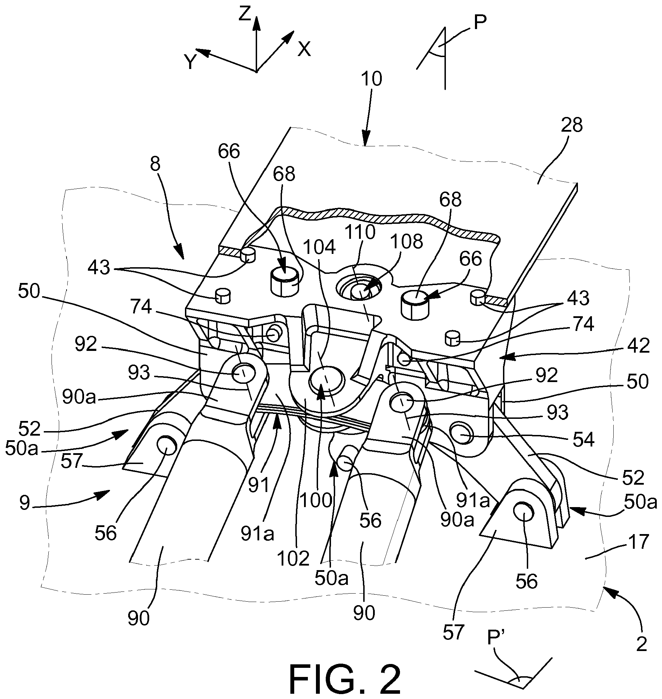

En référence aux figures 2 à 4, on peut voir une partie de l'attache moteur arrière 8 et du dispositif de reprise des efforts de poussée 9, dont certains éléments ont été volontairement omis, pour des raisons évidentes de clarté.

L'attache moteur arrière 8 comprend un corps 42 assimilable à une poutre transversale réalisée d'un seul tenant, et monté fixement sur le caisson 10, par exemple à l'aide de boulons verticaux 43 et de pions de cisaillement verticaux 66. Comme l'ensemble de la structure rigide 10 et du système de montage 11, ce corps 42 agencé sous le longeron inférieur 28 présente le plan P, orienté selon les directions X et Z, comme plan de symétrie. Ce plan P peut d'ailleurs être assimilé à un plan de symétrie vertical du mât 4.

Au niveau d'extrémités latérales opposées, le corps 42 comporte deux agencement 50a comprenant chacun une chape 50 sur laquelle est articulée une manille 52 par l'intermédiaire d'un axe 54 orienté selon la direction X. De plus, un autre axe 56 orienté selon la direction X est également prévu au niveau d'une extrémité inférieure de la manille 52, de manière à articuler cette dernière sur une ferrure/chape 57 montée fixement sur le carter 17 du turboréacteur 2. Afin de pouvoir faire face aux dilatations thermiques, les axes 54, 56 sont de préférence des axes rotulés.

Par ailleurs, un agencement 50a similaire, uniquement représenté partiellement sur la figure 2, est également mis en place entre les deux agencements latéraux 50a qui viennent d'être décrits.

Ainsi, l'attache moteur arrière 8 définit deux attaches latérales 50a et une attache centrale 50a située entre celles-ci, chacune capable de reprendre des efforts s'exerçant selon la direction Y. En effet, les efforts s'exerçant selon cette direction passent successivement par la ferrures 57, l'axe 56, la manille 52, l'axe 54, le corps d'attache 42, les pions de cisaillement 66, pour ensuite être introduits dans le caisson 10 via le longeron inférieur 28.

A cet égard, il est noté que les pions de cisaillement 66, orientés selon la direction Z, sont donc prévus pour autoriser le passage des efforts selon la direction Y entre le corps d'attache arrière 42 et la structure rigide 10 du mât d'accrochage.

Chaque pion 66, disposé à une extrémité latérale de la poutre 42, comporte une extrémité supérieure 68 située par exemple au niveau de l'une des nervures transversales 32 en forme de cadre (non représentées sur les figures 2 à 4), cette extrémité 68 occupant d'ailleurs un positionnement en saillie à l'intérieur de ce cadre la rendant facilement accessible. Le pion 66 se prolonge alors vers le bas en traversant successivement la partie inférieure de la nervure concernée et le longeron inférieur 28, pour se terminer par une extrémité inférieure faisant saillie vers le bas par rapport au longeron 28 du caisson, et étant logée dans un orifice (non représenté) du corps d'attache arrière 42. C'est donc le contact entre la surface de cette extrémité inférieure et celle de l'orifice du corps d'attache arrière 42 qui permet d'assurer la reprise des efforts selon la direction Y.

Il est noté que pour assurer la reprise des efforts selon la direction Y, seul l'un des trois agencements 50a peut être suffisant. Ainsi, on peut prévoir que les deux autres soient montés avec jeu, en particulier au niveau de l'axe 54 et/ou de l'axe 56, afin de les rendre inopérants en mode de fonctionnement normal. En revanche, en cas de défaillance de l'agencement 50a actif en mode normal, l'un ou les deux autres agencements 50 initialement en attente deviennent actifs, permettant avantageusement d'assurer une fonction de sécurité dite « Fail Safe » pour la transmission d'efforts selon la direction Y.

En outre, il est de préférence prévu une goupille 74 visible sur la figure 2, traversant successivement une partie avant du corps 42, un alésage (non visible) pratiqué dans l'extrémité inférieure du pion 66, ainsi qu'une partie centrale du même corps 42.

Avec cet agencement particulier, dans lequel la goupille 74, prenant la forme d'un axe, est de préférence orientée selon la direction X, la coopération entre l'alésage et la goupille 74 permet par conséquent de reprendre les efforts s'exerçant selon la direction Z en cas de défaillance/rupture des boulons verticaux 43. Cela permet avantageusement d'assurer une fonction de sécurité dite « Fail Safe » pour la transmission d'efforts selon la direction Z, sans pour autant complexifier sensiblement la conception du corps 42. Par ailleurs, il est noté que pour que ce chemin d'efforts soit uniquement opérant lors d'une défaillance/rupture des boulons verticaux 43 assurant la transmission des efforts selon la direction Z en mode normal, on prévoit alors un jeu fonctionnel entre la goupille 74 et l'alésage du pion 66.

Le dispositif de reprise des efforts de poussée 9 va à présent être détaillé, toujours en référence aux figures 2 à 4.

Le dispositif 9 comprend globalement deux bielles latérales de reprise des efforts de poussée 90, chacune de ces bielles comportant une extrémité avant (non représentée sur ces figures) raccordée au carter de soufflante 12, par exemple sur ou à proximité d'un plan médian horizontal du turbomoteur 2.

Les deux bielles latérales 90, disposées de part et d'autre du plan P, ont chacune une extrémité arrière 90a raccordée à un palonnier 91 spécifique à la présente invention.

Plus précisément, le palonnier 91 présente deux extrémités latérales opposées 91a, chacune montée articulée sur son extrémité arrière de bielle 90a associée. Une liaison mécanique, constituant la liaison par laquelle sont destinés à transiter les efforts de poussée en mode normal, est réalisée à l'aide d'un organe d'articulation 92 reliant l'extrémité arrière 90a en forme de chape, avec l'extrémité latérale de palonnier 91a correspondante.

De préférence, les deux organes 92 définissent respectivement deux axes d'articulation de bielle 93, également dits axes d'articulation d'extrémité arrière de bielle. Ils sont orthogonaux par rapport au plan P' des bielles 90, et agencés, en vue de face, de part et d'autre d'un organe d'articulation principal de palonnier 100.

Cet organe 100, traversé par le plan P, permet d'articuler le palonnier 91 sur le corps 42. En effet, il traverse non seulement ce palonnier 91, mais également une chape 102 faisant partie intégrante de la poutre 42, ou étant rapportée fixement sur celle-ci.

L'organe principal 100 définit alors un axe d'articulation principal de palonnier 104 agencé dans le plan P, et parallèle aux axes 93 précités.

Cet partie du dispositif 9 est sensiblement classique, dans la mesure où elle permet, en mode de fonctionnement normal « non défaillant », de faire transiter les efforts longitudinaux successivement selon les bielles 90, les organes d'articulation 92 de préférence du type organes simples et donc non doublés, le palonnier 91, l'organe d'articulation principal 100 de préférence du type organe simple et donc non doublé, la chape 102, le corps d'attache 42, les pions verticaux 66, pour ensuite être introduits dans le caisson 10 via le longeron inférieur 28 et la nervure transversale concernée.

De manière connue, le centrage de l'organe principal 100 sur le palonnier 91, dans la direction Y, permet d'équilibrer les efforts transmis par chacune des deux bielles latérales 90.

L'une des particularités de la présente invention réside dans la conception du palonnier 91. Effectivement, outre sa portion principale habituellement rencontrée, articulée par l'organe 100 et portant les extrémités latérales 91a, le palonnier comporte une extension arrière 106, située de préférence dans le même plan que la portion principale, à savoir dans le plan P' défini par les bielles 90.

De cette façon, il prend globalement la forme d'un T constitué d'une base et d'une barre, la base étant réalisée par l'extension arrière 106 et la barre par la portion principale. Dans cette configuration, les bielles 90 sont articulées aux extrémités 91a de la barre du T, et la liaison active en mode normale intégrant l'organe d'articulation principal 100 est située à l'intersection entre la base et la barre du T, la base 106 étant agencée selon la direction X en vue de dessus.

Une quatrième liaison d'articulation en attente est de plus prévue à l'extrémité libre de la base 106 du T, pour le montage du palonnier 91 sur le corps d'attache 42.

Plus précisément, l'extrémité libre de la base 106 du T est montée articulée avec jeu sur le corps 42 à l'aide d'un organe d'articulation secondaire de palonnier 108, qui est donc situé en arrière, notamment lorsqu'il est vu de dessus, par rapport à l'organe principal 100.

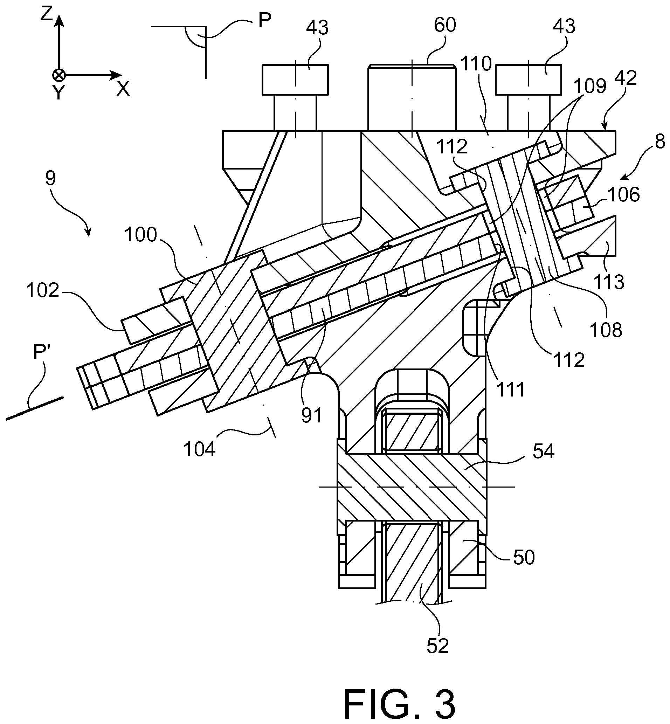

Le jeu désiré 109 pour rendre cette liaison mécanique inopérante en mode normal est par exemple appliqué entre l'organe d'articulation 108 et un orifice 111 de la base 106 qu'il traverse, comme montré sur la figure 3, avec les extrémités de l'organe 108 montées fixement sur le corps 42, respectivement dans les deux orifices opposés 112 du corps 42. Néanmoins, une situation inverse aurait pu consister à prévoir un jeu entre l'organe 108, de préférence du type organe simple et donc non doublé, et les deux orifices opposés 112 du corps 42 logeant respectivement les deux extrémités de l'organe 108, avec l'organe 108 porté par le palonnier 91.

Enfin, il est indiqué que l'organe d'articulation secondaire 108 définit un axe d'articulation secondaire de palonnier 110, également agencé dans le plan P, et de préférence parallèle aux axes 93 et 104 précités.

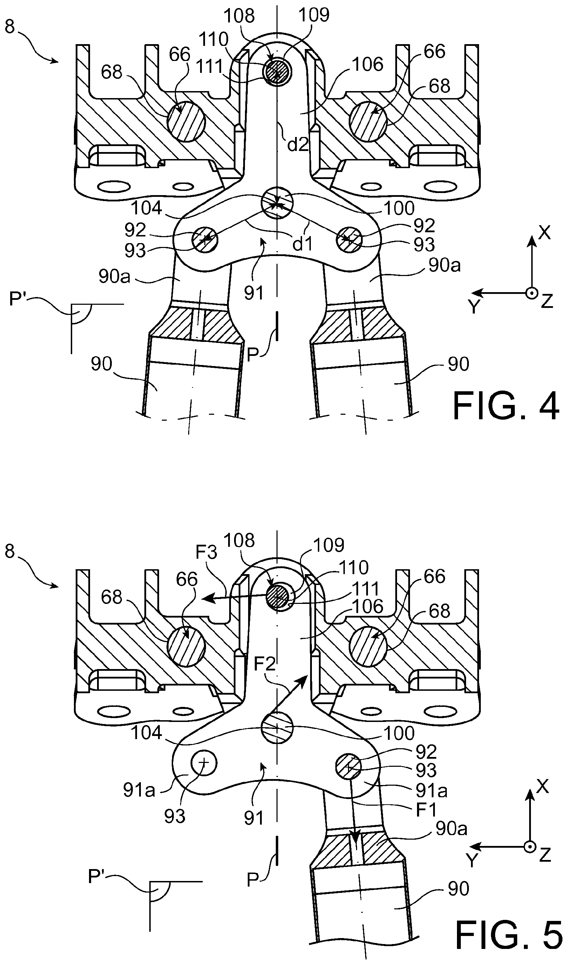

En référence à présent à la figure 5, on peut apercevoir le dispositif de reprise 9 dans un mode défaillant, rencontré après une défaillance d'une bielle, prenant par exemple la forme d'une rupture de cette bielle latérale 90, ou encore d'une rupture de son organe d'articulation 92. Lorsqu'une défaillance de ce type survient, le palonnier 91, qui n'est plus raccordé que par une seule bielle 90, pivote jusqu'à ce que la liaison en attente intégrant l'organe d'articulation secondaire 108 devienne active, par consommation du jeu 109 et entrée en contact de cet organe 108 avec la paroi de l'orifice 111 du palonnier plan 91. Ainsi, malgré la défaillance de l'une des bielles latérales 90, le palonnier 91 reste soumis à trois efforts équilibrés montrés schématiquement par les flèches F1, F2, F3 sur la figure 5, appliqués respectivement en trois points constitués par l'un des deux organes 92, l'organe principal 100, et l'organe secondaire 108, ces trois points formant de préférence un V dont la pointe est constituée par l'organe 100.

Plus l'organe d'articulation secondaire 108 est éloigné de l'organe 100, plus le bras de levier observé est important, et donc moins les efforts F1, F2, F3 transitant par le palonnier 91 sont élevés. Par conséquent, on prévoit que dans le plan P' du palonnier, la distance d1 entre l'axe d'articulation 104 et chaque axe d'articulation 93 est inférieure à la distance d2 entre les axes d'articulation 104 et 110, les distances d1 et d2 étant représentées schématiquement sur la figure 4. De manière encore plus préférentielle, on prévoit que le rapport entre d2 et d1 est de l'ordre de 2, étant par ailleurs indiqué que la distance d1 est de préférence la même pour les deux côtés du palonnier.

Grâce à cet arrangement schématisé sur les figures, les efforts F2 et F3 sont respectivement environ 12% supérieur à F1 et 50% inférieur à F1. A titre indicatif, si d1 est identique à d2, alors l'effort F2 est plus de 40% supérieur à l'effort F1, et l'effort F3 est égal à l'effort F1. D'autre part, si d2 est deux fois plus petit que d1, alors les efforts F2 et F3 sont plus de deux fois supérieurs à l'effort F1. Ainsi, on peut se rendre compte que grâce au palonnier 91 traversant le corps d'attache 42 avec son extension 106, la distance d2 obtenue entre les organes 100 et 108 est suffisamment grande pour conduire à un dimensionnement raisonnable de l'organe 108 et des chapes 102 et 113 recevant le palonnier. Il en résulte avantageusement un encombrement optimal du corps 42, et de l'ensemble de la partie arrière du système de montage du moteur.

De plus, il est noté que la poussée ainsi introduite en cas de défaillance d'une bielle 90, induit une torsion du corps d'attache 42 autour d'un axe fictif qui est dans le plan de symétrie P et qui est entre les deux organe de pivot 100 et 108. L'équilibre du corps 42 est ensuite réalisé par un couple de réactions au niveau des pions de cisaillement verticaux 66, et par conséquent, un couple autour d'un axe fictif qui est aussi dans le plan de symétrie P, et qui se situe également entre les deux organes 100, 108 compte tenu de la configuration particulière du palonnier 91 traversant le corps 42.

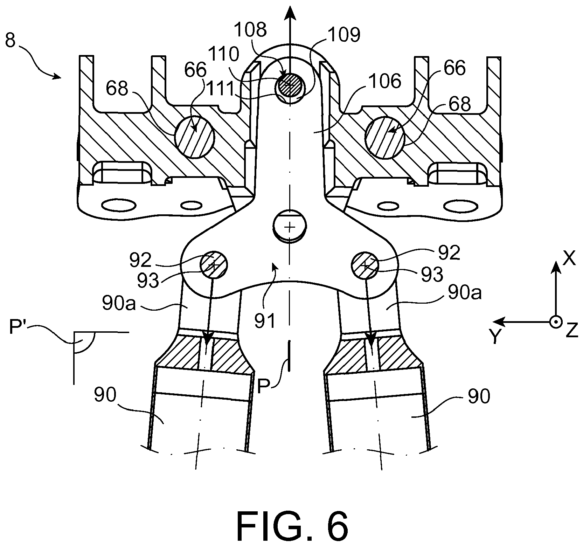

En référence à présent à la figure 6, on peut apercevoir le dispositif de reprise 9 dans un mode défaillant, rencontré après une rupture de l'organe d'articulation 100. Lorsqu'une défaillance de ce type survient, le palonnier 91, qui n'est plus raccordé que par les deux bielles 90, se déplace longitudinalement jusqu'à ce que la liaison en attente intégrant l'organe d'articulation secondaire 108 devienne active, par entrée en contact de cet organe 108 avec la paroi de l'orifice 111. Ainsi, malgré la défaillance de son organe d'articulation principal 108, le palonnier 91 reste soumis à trois efforts équilibrés montrés schématiquement par les flèches sur la figure 6, appliqués respectivement en trois points constitués par les deux organes 92 et l'organe secondaire 108, ces trois points formant de préférence un V dont la pointe est constituée par l'organe 108. Dans cette configuration, le palonnier 91 est alors en mesure d'osciller selon l'axe secondaire 110 défini par l'organe d'articulation 108 traversé par le plan P, et permet donc d'équilibrer les efforts transmis par les deux bielles 90, d'une manière identique ou similaire à celle observée en mode normal, lorsqu'il oscille autour de l'axe d'articulation 104 de l'organe principal 100.

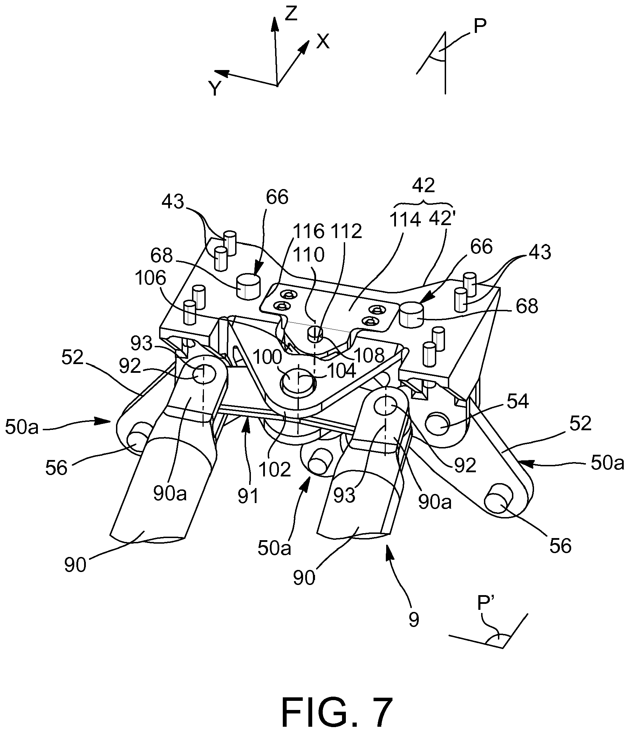

Sur la figure 7 montrant un autre mode de réalisation préféré de la présente invention, on peut voir que le corps d'attache 42 ne se présente plus sous la forme d'une unique poutre réalisée d'un seul tenant, mais d'une poutre transversale similaire 42' à laquelle il est adjoint une ferrure de secours 114 définissant une chape. Cette ferrure de secours 114 est montée par boulonnage dans un logement 116 pratiqué à cet effet dans la poutre 42', et, présente, sur les deux têtes de chape (une seule tête de chape étant visible sur la figure 7), respectivement les deux orifices 112 portant l'organe secondaire 108, qui traverse avec jeu l'extension 106 du palonnier 91 d'une manière analogue à celle décrite ci-dessus.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure.

## Revendications

1. Mât d'accrochage (4) pour moteur (2) d'aéronef, ledit mât comportant une structure rigide (10) formant caisson ainsi qu'un système de montage du moteur (11) monté sur ladite structure rigide (10) et comportant notamment un dispositif (9) de reprise des efforts de poussée générés par le moteur (2), comportant deux bielles latérales (90) ainsi qu'un palonnier (91) monté articulé sur un élément de support (42) fixe par rapport audit caisson (10), par l'intermédiaire d'un organe d'articulation principal de palonnier (100) disposé entre deux extrémités latérales (91a) dudit palonnier sur lesquelles lesdites deux bielles latérales (90) sont respectivement articulées, ledit organe d'articulation principal de palonnier (100) définissant un axe d'articulation principal de palonnier (104) agencé dans un plan (P) s'étendant selon des directions verticale (Z) et longitudinale (X) de ladite structure rigide (10), ledit palonnier (91) étant en outre monté articulé sur ledit élément de support (42), à l'aide d'un organe d'articulation secondaire de palonnier (108) situé à distance, en vue de dessus, dudit organe d'articulation principal de palonnier (100), et définissant un axe d'articulation secondaire de palonnier (110) également agencé dans ledit plan (P), ledit organe d'articulation secondaire de palonnier (108) étant porté par l'un des deux éléments parmi ledit palonnier (91) et ledit élément de support (42), et traversant avec jeu (109) l'autre de ces deux éléments, ledit mât étant conçu de sorte qu'en cas de défaillance de l'une quelconque des deux bielles latérales (90), la rotation dudit palonnier autour de l'axe d'articulation principal de palonnier (104) est stoppée par l'entrée en contact dudit organe d'articulation secondaire de palonnier (108) avec ledit autre des deux éléments, ledit palonnier (91) étant agencé dans un plan correspondant à un plan (P') défini par lesdites bielles latérales de reprise des efforts de poussée (90),
**caractérisé en ce que** dans ledit plan (P'), la distance (d1) entre l'axe d'articulation principal de palonnier (104) et chaque axe d'articulation d'extrémité arrière de bielle (93) est inférieure ou égale à la distance (d2) entre l'axe d'articulation principal de palonnier (104) et l'axe d'articulation secondaire de palonnier (110).

2. Mât d'accrochage (4) selon la revendication 1, **caractérisé en ce que** ledit système de montage du moteur (11) comporte notamment une attache moteur arrière (8) comprenant un corps d'attache (42) sur lequel est articulée au moins une manille (52) également destinée à être articulée sur le moteur (2), ledit élément de support étant ledit corps d'attache (42).

3. Mât d'accrochage (4) selon la revendication 1 ou la revendication 2, **caractérisé en ce que** ledit palonnier (91) prend la forme d'un T ou d'une étoile à trois branches.

4. Mât d'accrochage (4) selon l'une quelconque des revendications précédentes, **caractérisé en ce que** ledit plan (P) constitue un plan de symétrie pour la structure rigide (10) et pour le système de montage du moteur (11).

5. Mât d'accrochage (4) selon l'une quelconque des revendications précédentes, **caractérisé en ce que** ledit organe d'articulation secondaire de palonnier (108) se situe vers l'arrière, en vue de dessus, par rapport audit organe d'articulation principal de palonnier (100).

6. Mât d'accrochage (4) selon l'une quelconque des revendications précédentes, **caractérisé en ce que** ledit corps d'attache (42) présente une poutre transversale (42') sur laquelle est montée une ferrure de secours (114) traversée avec jeu par ledit organe d'articulation secondaire de palonnier (108).

7. Ensemble moteur (1) pour aéronef **caractérisé en ce qu'**il comprend un mât d'accrochage (4) selon l'une quelconque des revendications précédentes, ainsi qu'un moteur (2) monté fixement sur ledit mât.

8. Aéronef comprenant au moins un ensemble moteur (1) selon la revendication 7.

## Patentansprüche

1. Aufhängungsstrebe (4) für ein Luftfahrzeugtriebwerk (2), wobei die Strebe eine kastenförmige starre Struktur (10) aufweist, sowie ein System (11) zur Anbringung des Triebwerks, das an dieser starren Struktur (10) angebracht ist und insbesondere eine Vorrichtung (9) zur Aufnahme der durch das Triebwerk (2) erzeugten Schubkräfte aufweist, die zwei seitliche Stangen (90) sowie einen Tragrahmen (91) aufweist, der über ein Tragrahmen-Hauptgelenkglied (100), das zwischen zwei seitlichen Ende (91a) des Tragrahmens angeordnet ist, an welchen die zwei seitlichen Stangen (90) jeweils angelenkt sind, gelenkig an einem bezüglich des Kastens (10) festen Stützelement (42) angebracht ist, wobei das Tragrahmen-Hauptgelenkglied (100) eine Tragrahmen-Hauptgelenkachse (104) definiert, die in einer Ebene (P) angeordnet ist, die sich in einer vertikalen Richtung (Z) und einer Längsrichtung (X) der starren Struktur (10) erstreckt, wobei der Tragrahmen (91) außerdem an dem Stützelement (42) mithilfe eines sekundären Tragrahmen-Gelenkgliedes (108) gelenkig angebracht ist, das sich, in der Draufsicht gesehen, in einem Abstand von dem Tragrahmen-Hauptgelenkglied (100) befindet und eine sekundäre Tragrahmen-Gelenkachse (110) definiert, die ebenfalls in der Ebene (P) angeordnet ist, wobei das sekundäre Tragrahmen-Gelenkglied (108) von einem der zwei Elemente, dem Tragrahmen (91) oder dem Stützelement (42), getragen wird und das andere von diesen zwei Elementen mit Spiel (109) durchquert, wobei die Strebe derart ausgebildet ist, dass im Falle eines Ausfalls irgendeiner der zwei seitlichen Stangen (90) die Drehung des Tragrahmens um die Tragrahmen-Hauptgelenkachse (104) durch das Inkontaktkommen des sekundären Tragrahmen-Gelenkgliedes (108) mit dem anderen der zwei Elemente gestoppt wird, wobei der Tragrahmen (91) in einer Ebene angeordnet ist, die einer Ebene (P') entspricht, die durch die seitlichen Stangen zur Aufnahme der Schubkräfte (90) definiert ist, **dadurch gekennzeichnet, dass** in der Ebene (P') der Abstand (d1) zwischen der Tragrahmen-Hauptgelenkachse (104) und jeder Gelenkachse eines hinteren Stangenendes (93) kleiner oder gleich dem Abstand (d2) zwischen der Tragrahmen-Hauptgelenkachse (104) und der sekundären Tragrahmen-Gelenkachse (110) ist.

2. Aufhängungsstrebe (4) nach Anspruch 1, **dadurch gekennzeichnet, dass** das System (11) zur Anbringung des Triebwerks insbesondere eine hintere Triebwerkbefestigung (8) aufweist, die einen Befestigungskörper (42) umfasst, an welchem wenigstens ein Koppelglied (52) angelenkt ist, das auch dazu bestimmt ist, am Triebwerk (2) angelenkt zu werden, wobei das Stützelement der Befestigungskörper (42) ist.

3. Aufhängungsstrebe (4) nach Anspruch 1 oder Anspruch 2, **dadurch gekennzeichnet, dass** der Tragrahmen (91) die Form eines "T" oder eines dreistrahligen Sterns aufweist.

4. Aufhängungsstrebe (4) nach einem der vorhergehenden Ansprüche, **dadurch gekennzeichnet, dass** die Ebene (P) eine Symmetrieebene für die starre Struktur (10) und für das System (11) zur Anbringung des Triebwerks darstellt.

5. Aufhängungsstrebe (4) nach einem der vorhergehenden Ansprüche, **dadurch gekennzeichnet, dass** sich das sekundäre Tragrahmen-Gelenkglied (108), in der Draufsicht gesehen, hinten in Bezug auf das Tragrahmen-Hauptgelenkglied (100) befindet.

6. Aufhängungsstrebe (4) nach einem der vorhergehenden Ansprüche, **dadurch gekennzeichnet, dass** der Befestigungskörper (42) einen Querträger (42') aufweist, an welchem ein Hilfsbeschlag (114) angebracht ist, der von dem sekundären Tragrahmen-Gelenkglied (108) mit Spiel durchquert wird.

7. Triebwerkanordnung (1) für ein Luftfahrzeug, **dadurch gekennzeichnet, dass** sie eine Aufhängungsstrebe (4) nach einem der vorhergehenden Ansprüche sowie ein Triebwerk (2), das fest an dieser Strebe angebracht ist, umfasst.

8. Luftfahrzeug, welches mindestens eine Triebwerkanordnung (1) nach Anspruch 7 umfasst.

## Claims

1. An engine mounting structure (4) for aircraft engine (2), where the said structure comprises a rigid structure (10) forming a caisson together with an engine mounting system (11) mounted on the said rigid structure (10) and notably comprising a device (9) to transmit the thrust efforts generated by the engine (2), comprising two lateral connecting rods (90) and a spreader beam (91) mounted in connected fashion on a support element (42) which is fixed relative to the said caisson (10), through a principal spreader beam connecting device (100) positioned between two lateral ends (91a) of the said spreader beam on to which the said two lateral connecting rods (90) are respectively connected, where the said principal spreader beam connecting device (100) defines a principal spreader beam hinge line (104) positioned in a plane (P) which extends in the vertical direction (Z) and longitudinal direction (X) of the said rigid structure (10), where the said spreader beam (91) is moreover mounted in connected fashion on the said support element (42), using a secondary spreader beam connecting device (108) located at a distance, seen from above, from the said principal spreader beam connecting device (100), and defining a secondary spreader beam connecting device (110) which is also positioned in the said plane (P), where the said secondary spreader beam connecting device (108) is supported by one of the two elements, namely either the spreader beam (91) or the said support element (42), and traversing with a play (109) the other of these two elements,
said engine mounting structure being designed such that in the event of a failure of either of the two lateral connecting rods (90), the rotation of the said spreader beam around the principal spreader beam hinge line (104) is stopped by the said secondary spreader beam connecting device (108) coming into contact with the said other of the two elements,
said spreader beam (91) being positioned in a plane corresponding to a plane (P') defined by the said thrust efforts transmission lateral connecting rods (90),
**characterised in that** in the said plane (P'), the distance (d1) between the principal spreader beam hinge line (104) and each connecting rod rear end hinge line (93) is less than or equal to the distance (d2) between the principal spreader beam hinge line (104) and the secondary spreader beam hinge line (110).

2. An engine mounting structure (4) according to claim 1, **characterised in that** the said engine mounting system (11) notably comprises a rear engine fastener (8) comprising an attachment strut (42) to which is connected at least one shackle (52), also intended to be connected to the engine (2), where the said support element is the said attachment strut (42).

3. An engine mounting structure (4) according to claim 1 or claim 2, **characterised in that** the said spreader beam (91) has the shape of a T or a three-branched star.

4. An engine mounting structure (4) according to any of the previous claims, **characterised in that** the said plane (P) constitutes a symmetry plane for the rigid structure (10) and for the engine mounting system (11).

5. An engine mounting structure (4) according to any of the previous claims, **characterised in that** the said secondary spreader beam connecting device (108) is located towards the rear, as seen from above, compared to the said principal spreader beam connecting device (100).

6. An engine mounting structure (4) according to any of the previous claims, **characterised in that** the said attachment strut (42) has a transverse beam (42') on which is mounted an emergency shackle (114) traversed with some play by the said secondary spreader beam connecting device (108).

7. An engine unit (1) for aircraft **characterised in that** it comprises an engine mounting structure (4) according to any of the previous claims, together with an engine (2) mounted in fixed fashion on to the said structure.

8. An aircraft including at least one engine unit (1) according to claim 7.
